# EUROPEAN PATENT APPLICATION

(11) **EP 3 054 719 A1**
(43) Date of publication of application: **10.08.2016**
(21) Application number: 13894736.1
(22) Date of filing: 30.09.2013
(51) Int. Cl.: H04W 24/08

(54) **SIGNAL MEASUREMENT METHOD, USER EQUIPMENT, AND BASE STATION**

(71) Applicant: Fujitsu Limited, Kawasaki-shi, Kanagawa 211-8588 (JP)
(72) Inventor: WANG, Yi, Beijing 100025 (CN); ZHANG, Lei, Beijing 100025 (CN); ZHANG, Yi, Beijing 100025 (CN)
(74) Representative: Ward, Gregory Peter
(86) International application number: PCT/CN2013/084737
(87) International publication number: WO 2015/042965

(57) **Abstract**

Embodiments of the present disclosure provide a signal measurement method, user equipment and base station. The signal measurement method includes: a user equipment measures a received signal in a time-frequency resource in part of subframes or all subframes, so as to obtain a first measurement result and a second measurement result; and obtains information indicative of channel quality according to the first measurement result and the second measurement result. With the embodiments of the present disclosure, influence of the cells in an off-state may be taken into account, thereby accurately obtain measurement results.

## Description

### Technical Field

The present disclosure relates to the field of communications, and in particular to a signal measurement method, a user equipment and a base station.

### Background

In an existing LTE/LTE-A system, a user equipment (UE) may measure a received signal, and may measure reference signal received power (RSRP), or a received signal strength indicator (RSSI), or reference signal received quality (RSRQ), etc., of a serving cell, and a neighboring cell, etc.

For example, the RSRP is defined as a linear average value of power of signals received in all resource elements (REs) in a symbol carrying a cell-specific reference signal. The RSSI is deemed as a linear average of total received power, including signals of co-channel serving cells and non-serving cells, adjacent channel interference and thermal noises, etc. And the RSRQ is defined as N*RSRP / (LTE carrier RSSI), in which N is the number of resource blocks (RBs) of a measurement bandwidth of the LTE carrier RSSI.

A user equipment may also perform measurement of channel state information (CSI), such as obtaining channel information of a serving cell by measuring a channel state information reference signal (CSI-RS) of the serving cell or a cell-specific common reference signal (CRS), and estimating a channel quality indicator (CQI) by measuring interference produced by an adjacent cell through measurement of configured interference measurement resources (IMRs) or CRSs. Different from acquiring long-term statistical quality of a channel of radio resource management (RRM) measurement, the CSI measurement is focused on short-term channel quality.

On the other hand, heterogeneous networks including small cells appear at present. For the sake of energy saving, some small cells may be in an off or dormant state at a certain moment. In such a case, the small cells in the off or dormant state (hereinafter referred to as cells in an off-state) transmit discovery signals, or transmit discovery signals and measurement signals, in a relatively long period, but do not transmit signals supporting data demodulation.

And if small cells in an on-state and an off-state transmit signals of multiple cells in the same subframes, power of some signals may be enhanced, and power of some signals may be reduced. For example, power of the signals of the small cells in an off-state may be enhanced, or power of the signals of the small cells in an on-state may be reduced.

However, it was found by the inventors that an existing scheme for measuring received signals does not take influence of cells in an off-state into account, hence, measurement results cannot be accurately obtained.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

### Summary

Embodiments of the present disclosure provide a signal measurement method, a user equipment and a base station, with an object being to take influence of cells in an off-state into account in measuring received signals, so as to accurately obtain measurement results.

According to an aspect of the embodiments of the present disclosure, there is provided a signal measurement method, including:
measuring, by a user equipment, a received signal in a time-frequency resource in part of subframes or all subframes, so as to obtain a first measurement result and a second measurement result; and
obtaining information indicative of channel quality according to the first measurement result and the second measurement result;
wherein the first measurement result is a sum of a received equivalent noise and interference power, and the second measurement result is a result of measurement of a reference signal in the time-frequency resource.

According to another aspect of the embodiments of the present disclosure, there is provided a signal measurement method, including:
measuring, by a user equipment, a received signal in a time-frequency resource in part of subframes or all subframes, so as to obtain a first measurement result and a second measurement result; and
obtaining information indicative of channel quality according to the first measurement result and the second measurement result;
wherein a resource of the first measurement result and a resource of the second measurement result are configured respectively.

According to a further aspect of the embodiments of the present disclosure, there is provided a signal measurement method, including:
configuring, by a base station, a resource by using high-layer signalling for a user equipment, so that the user equipment measures a received signal in a time-frequency resource in part of subframes or all subframes so as to obtain a first measurement result and a second measurement result;
wherein the first measurement result is a sum of a received equivalent noise and interference power, and the second measurement result is a result of measurement of a reference signal in the time-frequency resource.

According to still another aspect of the embodiments of the present disclosure, there is provided a signal measurement method, including:
configuring, by a base station, a user equipment with resources for obtaining a first measurement result and a second measurement result respectively, so that the user equipment measures a received signal in a time-frequency resource in part of subframes or all subframes, so as to obtain the first measurement result and the second measurement result.

According to still another aspect of the embodiments of the present disclosure, there is provided a user equipment, including:
a signal measuring unit configured to measure a received signal in a time-frequency resource in part of subframes or all subframes, so as to obtain a first measurement result and a second measurement result; wherein the first measurement result is a sum of a received equivalent noise and interference power, and the second measurement result is a result of measurement of a reference signal in the time-frequency resource; and
an information acquiring unit configured to obtain information indicative of channel quality according to the first measurement result and the second measurement result.

According to still another aspect of the embodiments of the present disclosure, there is provided a user equipment, including:
a signal measuring unit configured to measure a received signal in a time-frequency resource in part of subframes or all subframes, so as to obtain a first measurement result and a second measurement result; wherein a resource of the first measurement result and a resource of the second measurement result are configured respectively; and
an information acquiring unit configured to obtain information indicative of channel quality according to the first measurement result and the second measurement result.

According to still another aspect of the embodiments of the present disclosure, there is provided a base station, including:
a resource configuring unit configured to configure a resource by using high-layer signalling for a user equipment, so that the user equipment measures a received signal in a time-frequency resource in part of subframes or all subframes, so as to obtain a first measurement result and a second measurement result;
wherein the first measurement result is a sum of a received equivalent noise and interference power, and the second measurement result is a result of measurement of a reference signal in the time-frequency resource.

According to still another aspect of the embodiments of the present disclosure, there is provided a base station, including:
a resource configuring unit configured to configure a user equipment with resources for obtaining a first measurement result and a second measurement result respectively, so that the user equipment measures a received signal in a time-frequency resource in part of subframes or all subframes, so as to obtain the first measurement result and the second measurement result.

According to still another aspect of the embodiments of the present disclosure, there is provided a communication system, including the above-described user equipment and base station.

According to still another aspect of the embodiments of the present disclosure, there is provided a computer-readable program, wherein when the program is executed in a user equipment, the program enables the computer to carry out the signal measurement method as described above in the user equipment.

According to still another aspect of the embodiments of the present disclosure, there is provided a storage medium in which a computer-readable program is stored, wherein the computer-readable program enables the computer to carry out the signal measurement method as described above in a user equipment.

According to still another aspect of the embodiments of the present disclosure, there is provided a computer-readable program, wherein when the program is executed in a base station, the program enables the computer to carry out the signal measurement method as described above in the base station.

According to still another aspect of the embodiments of the present disclosure, there is provided a storage medium in which a computer-readable program is stored, wherein the computer-readable program enables the computer to carry out the signal measurement method as described above in a base station.

An advantage of the embodiments of the present disclosure exists in that the received signals are measured in the time-frequency resources of part or all of the subframes, so as to obtain the first measurement result and the second measurement result, and the information indicative of channel quality is obtained according to the first measurement result and the second measurement result, in which influence of cells in an off-state is taken into account, thereby accurately obtaining the measurement results.

With reference to the following description and drawings, the particular embodiments of the present disclosure are disclosed in detail, and the principle of the present disclosure and the manners of use are indicated. It should be understood that the scope of the embodiments of the present disclosure is not limited thereto. The embodiments of the present disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

Many aspects of the disclosure can be better understood with reference to the following drawings, The components in the drawings are not necessarily to scale, emphasis instead being placed upon clearly illustrating the principles of the present disclosure. To facilitate illustrating and describing some parts of the disclosure, corresponding portions of the drawings may be exaggerated in size.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments,
FIG. 1 is a flowchart of the signal measurement method of an embodiment of the present disclosure;
FIG. 2 is another flowchart of the signal measurement method of the embodiment of the present disclosure;
FIG. 3 shows a case where measurement is performed on all 14 OFDM symbols of a subframe;
FIG. 4 shows a case where measurement is performed on a part of OFDM symbols of a subframe;
FIG. 5 is a further flowchart of the signal measurement method of the embodiment of the present disclosure;
FIG. 6 is an exemplary diagram of signal measurement of an embodiment of the present disclosure;
FIG. 7 is another exemplary diagram of signal measurement of the embodiment of the present disclosure;
FIG. 8 is a schematic diagram of a structure of the user equipment of an embodiment of the present disclosure;
FIG. 9 is another schematic diagram of a structure of the user equipment of the embodiment of the present disclosure;
FIG. 10 is a further flowchart of the signal measurement method of the embodiment of the present disclosure;
FIG. 11 is still another flowchart of the signal measurement method of the embodiment of the present disclosure;
FIG. 12 is a schematic diagram of a structure of the base station of an embodiment of the present disclosure;
FIG. 13 is another schematic diagram of a structure of the base station of the embodiment of the present disclosure; and
FIG. 14 is a schematic diagram of a structure of the communication system of an embodiment of the present disclosure.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

### Embodiment 1

An embodiment of the present disclosure provides a signal measurement method, which shall be described from a user equipment side.

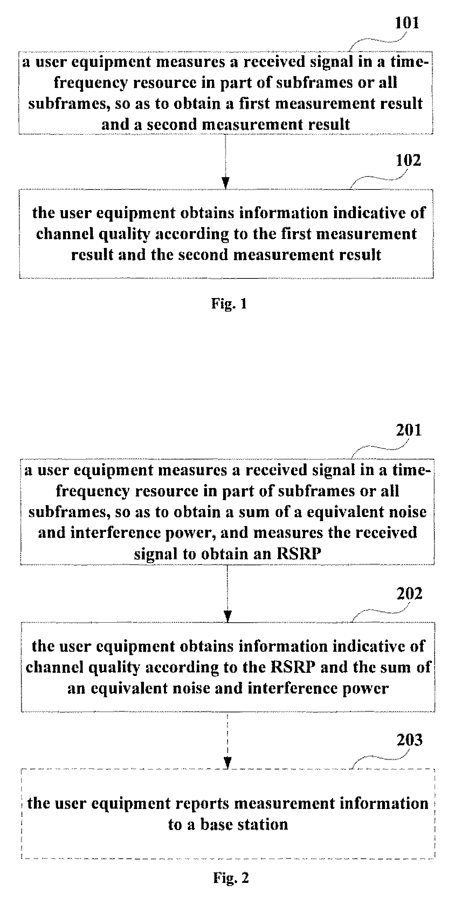

FIG. 1 is a flowchart of the signal measurement method of an embodiment of the present disclosure, As shown in FIG. 1, the signal measurement method includes:
step 101: a user equipment measures a received signal in a time-frequency resource in part of subframes or all subframes, so as to obtain a first measurement result and a second measurement result; and
step 102: the user equipment obtains information indicative of channel quality according to the first measurement result and the second measurement result.

In this embodiment, the first measurement result may be a sum of a received equivalent noise and interference power (i.e. I+N), and the second measurement result may be a result of measurement of a reference signal (RS) in the time-frequency resource, such as an RSRP. The information indicative of channel quality may be quality of a channel of RRM measurement, including a signal to interference plus noise ratio (SINR), or including an RSSI and/or an RSRQ. And the information indicative of channel quality may also be a measurement result of CSI measurement, such as a CQI. However, the present disclosure is not limited thereto, and particular information may be determined according to an actual situation.

For example, the user equipment may obtain the SINR through calculation according to the measured RSRP and the sum of the measured equivalent noise and interference power, and report the SINR to the base station as demanded. Or, the user equipment may obtain the RSSI and/or the RSRQ through calculation according to the measured RSRP and the sum of the measured equivalent noise and interference power, and report the RSSI and/or the RSRQ obtained through calculation to the base station as demanded.

In this embodiment, the user equipment may obtain the information indicative of channel quality according to the first measurement result and the second measurement result. For example, the first measurement result is I+N, the second measurement result is RSRP, and the calculation may be performed according to SINR = RSRP / (I+N).

It should be noted that the first measurement result and second measurement result as well as the information indicative of channel quality are only illustrated above. However, the present disclosure is not limited thereto, and particular first measurement result and second measurement result as well as how to calculate the information indicative of channel quality may be determined according to an actual situation.

Therefore, what is different from the prior art is that the information indicative of channel quality is obtained according to the first measurement result and the second measurement result in the present disclosure, in which influence of cells in an off-state is taken into account, thereby accurately obtaining the measurement results. Following description shall be given taking that the first measurement result is I+N and the second measurement result is RSRQ as an example.

FIG. 2 is another flowchart of the signal measurement method of the embodiment of the present disclosure. As shown in FIG. 2, the signal measurement method includes:
step 201: a user equipment measures a received signal in a time-frequency resource in part of subframes or all subframes, so as to obtain a sum of an equivalent noise and interference power, and measures the received signal to obtain an RSRP;
step 202: the user equipment obtains information indicative of channel quality according to the RSRP and the sum of an equivalent noise and interference power; and
step 203: the user equipment reports measurement information to a base station.

In this embodiment, the user equipment may transmit the measurement information to the base station according to an actual situation. The measurement information may include one piece of the following information or a combination thereof: a first measurement result, a second measurement result, and the information indicative of channel quality obtained by the user equipment.

In this embodiment, the sum of a received equivalent noise and interference power may be: a linear average value of receiving power observed in a measurement bandwidth in all OFDM symbols, or a linear average value of receiving power observed in a measurement bandwidth in OFDM symbols including no a signal used for measurement. The sum of a received equivalent noise and interference power may include: a result of measurement of a co-frequency non-serving cell signal, adjacent channel interference and a thermal noise.

Tables 1-3 show examples of the first measurement result of different definitions. Wherein, measurement A may be RSRQ measurement, or SINR measurement, etc.

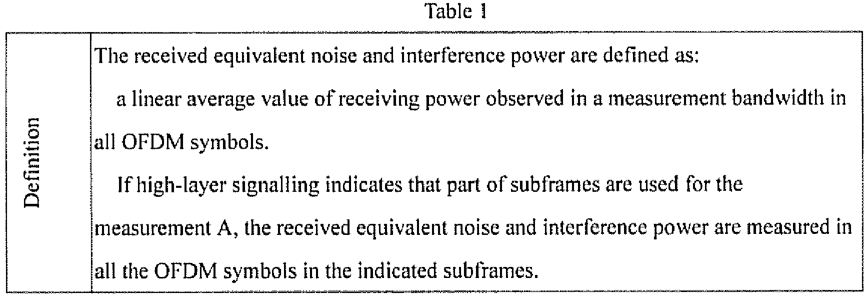

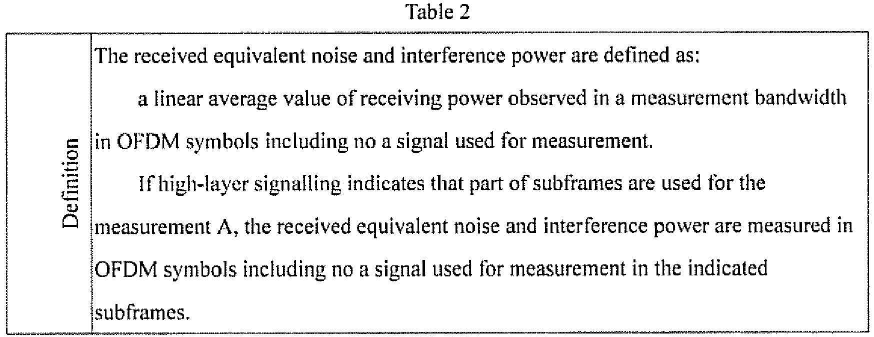

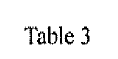

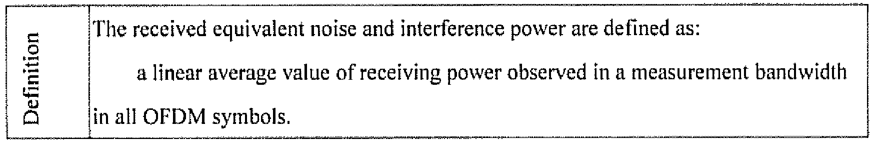

In this embodiment, the second measurement result may also be defined, for example, a definition of the SINR may be as shown in Table 4 below, and a definition of the RSRQ may be as shown in Table 5 below.

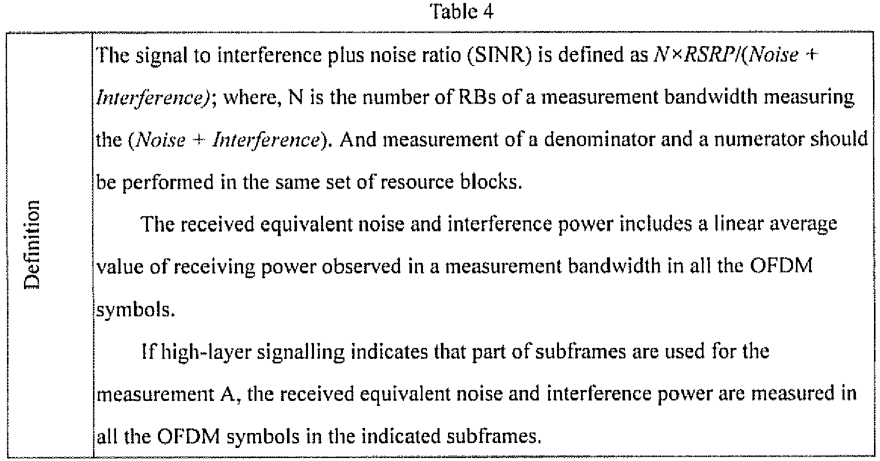

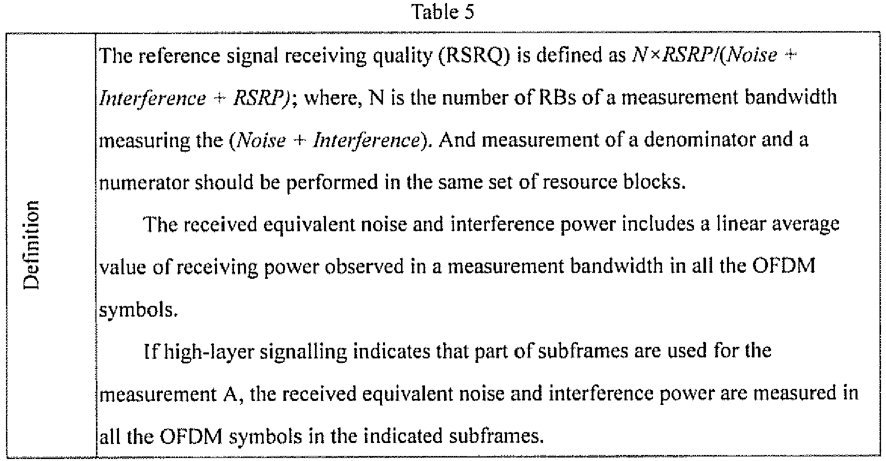

It can be seen from the above tables 1-3 that an RSSI measurement manner identical to that of the prior art may be adopted in the embodiment of the present disclosure, for example, the linear average value of receiving power observed in a measurement bandwidth in all the OFDM symbols. However, their influence is different. A result of the measurement of the RSSI contains the serving cell, co-frequency non-serving cell, adjacent channel interference and a thermal noise; but when a cell in an off-state is taken into consideration, a result of measurement in identical time-frequency resources is equivalent to containing only the co-frequency non-serving cell in an on-state, adjacent channel interference and a thermal noise. Hence, the result of measurement is the received equivalent noise and interference power.

In this embodiment, the first measurement result and the second measurement result are measured respectively, and a needed channel intensity may be obtained by combining the first measurement result and the second measurement result. Hence, influence of a cell in an off-state may be taken into account, so as to accurately obtain a measurement result.

In this embodiment, the time-frequency resources for obtaining the first measurement result may include: all or part of subcarriers of multiple physical resource blocks of all OFDM symbols in part or all the subframes, or all or part of subcarriers of multiple physical resource blocks of part of OFDM symbols in part or all the subframes.

In an implementation, a user equipment measuring a small cell in an off-state may not be configured with subframes, that is, the sum of an equivalent noise and interference power may be measured in all or part of the OFDM symbols in all available downlink subframes. For example, the measurement may be performed on 14 OFDM symbols, and measurement results may be averaged; or results of measurement in OFDM symbols containing no reference signal (RS) may also be averaged.

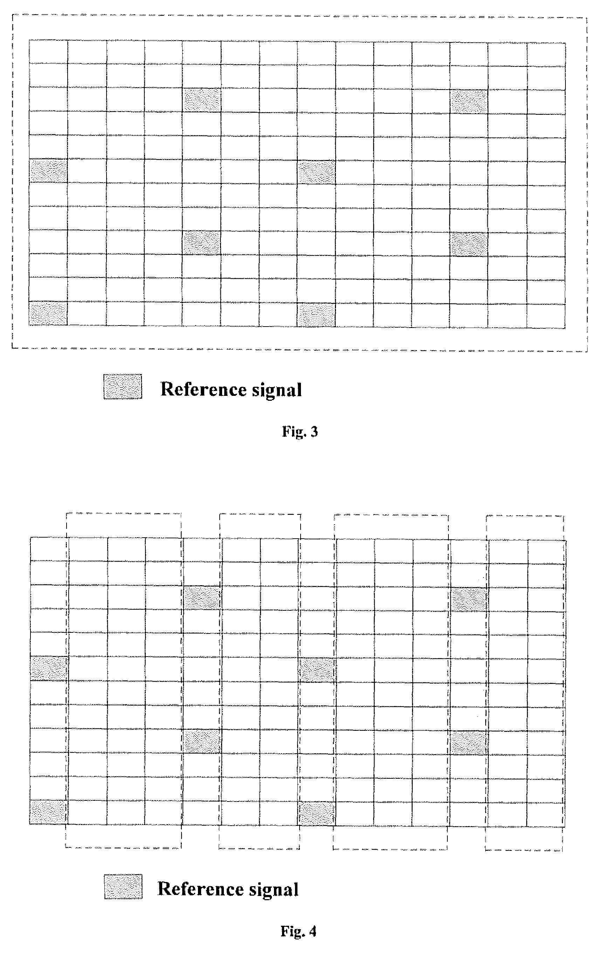

FIG. 3 shows a case where measurement is performed on all 14 OFDM symbols of a subframe, and FIG. 4 shows a case where measurement is performed on a part of OFDM symbols of a subframe. As shown in FIG. 4, measurement may be performed only on 10 OFDM symbols containing no reference signal (RS).

In another implementation, part of the subframes may be configured via high-layer signalling, and configuration information on the part of the subframes may include period information and indication information on part of subframes within each period. Wherein, a part of the OFDM symbols may be configured via high-layer signalling or may be predefined, for example, they may be configured as OFDM symbols containing no RS.

In particular, a period may be indicated by log₂M or M bits, for example, 2 bits indicate one of periods (0, 50, 100, 200), and M bits indicate which of subframes in each period may be used for measurement, for example, 2 bits are used to indicate one of periods (1, 5, 10, 20).

Or, K bits may be used to indicate a starting point, for example, 2 bits indicate one of starting points (0, M/4, 2/M, 3/4M). The indication here may in a form a bitmap, and may also be in other forms.

Or, a certain length may directly indicate a part of subframes, for example, bitmap signalling of a length of M=100 denotes that a period is 100, and if a value is 1, it denotes that the subframe is used for measurement.

It should be noted that the above description is given taking that the first measurement result is the sum of an equivalent noise and interference power in the RRM measurement and the second measurement result is the RSRP in the RRM measurement as an example. However, the present disclosure is not limited thereto, and a particular measurement result may be determined according to an actual situation. For example, the first measurement result is the sum of an equivalent noise and interference power in CSI measurement, and the second measurement result is reference receiving power in CSI measurement.

It can be seen from the above embodiment that the receiving signals in the time-frequency resources in part or all the subframes are measured, so as to obtain the first measurement result and the second measurement result, and the information indicative of channel quality is obtained according to the first measurement result and the second measurement result, which may take influence of a cell in an off-state into account, thereby accurately obtaining measurement results.

### Embodiment 2

An embodiment of the present disclosure provides a signal measurement method, which describes the present disclosure based on Embodiment 1, with identical contents being not going to be described herein any further.

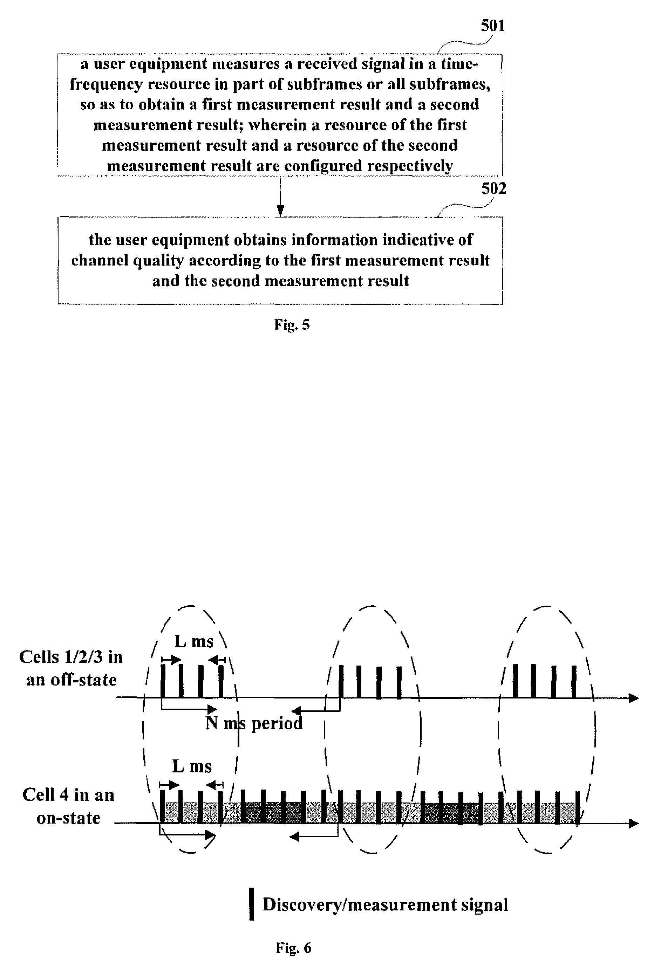

FIG. 5 is a further flowchart of the signal measurement method of the embodiment of the present disclosure. As shown in FIG. 5, the signal measurement method includes:
step 501: a user equipment measures a received signal in a time-frequency resource in part of subframes or all subframes, so as to obtain a first measurement result and a second measurement result; wherein a resource of the first measurement result and a resource of the second measurement result are configured respectively; and
step 502: the user equipment obtains information indicative of channel quality according to the first measurement result and the second measurement result.

In this embodiment, the first measurement result and the second measurement result may be defined. Tables 6-8 show examples of different definitions of the second measurement result.

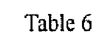

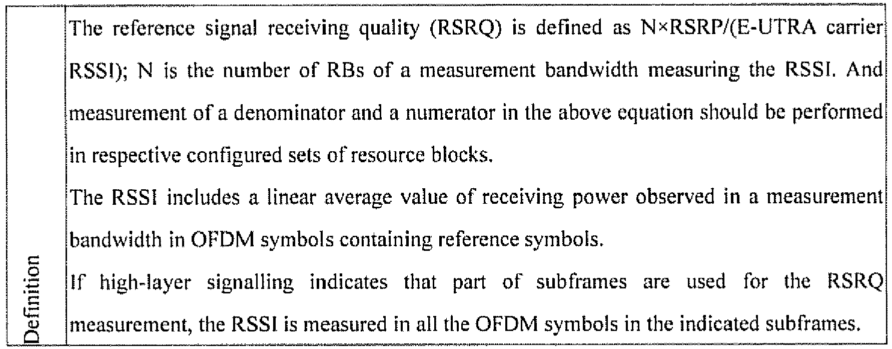

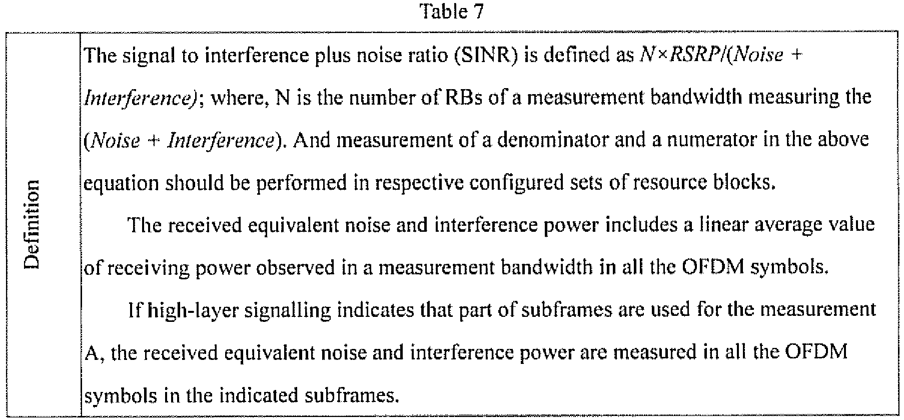

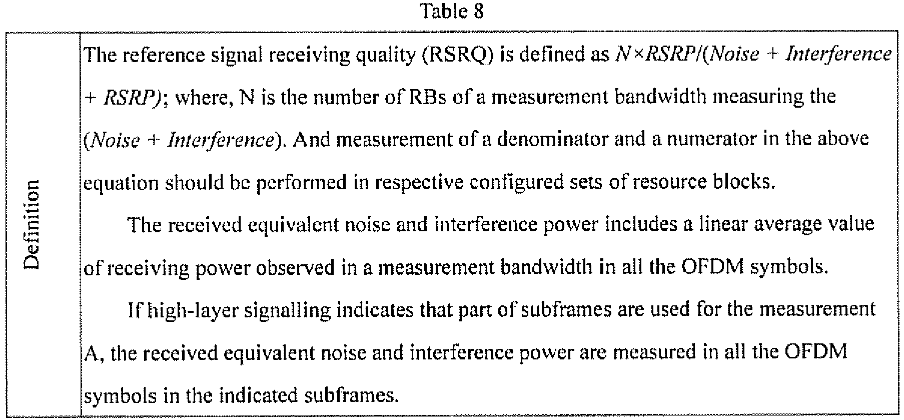

In this embodiment, the resource for acquiring the first measurement result and the resource for acquiring the second measurement result are configured respectively, which may be different from each other. For example, measured subframe patterns may be independently configured respectively. Tables 9-11 show examples of independently configuring respectively.

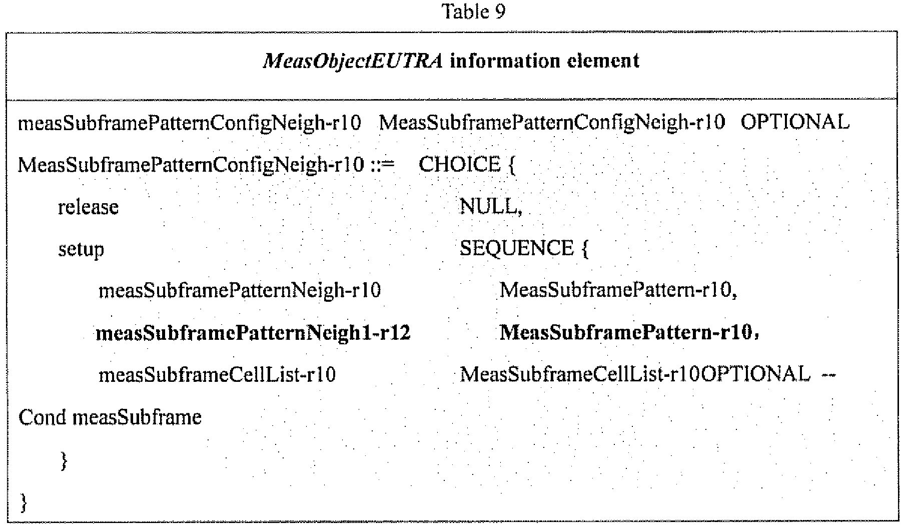

As shown in Table 9, measSubframePatternNeigh-r10 is configuration of a first measure object, and measSubframePatternNeigh1-r12 is configuration of a second measure object.

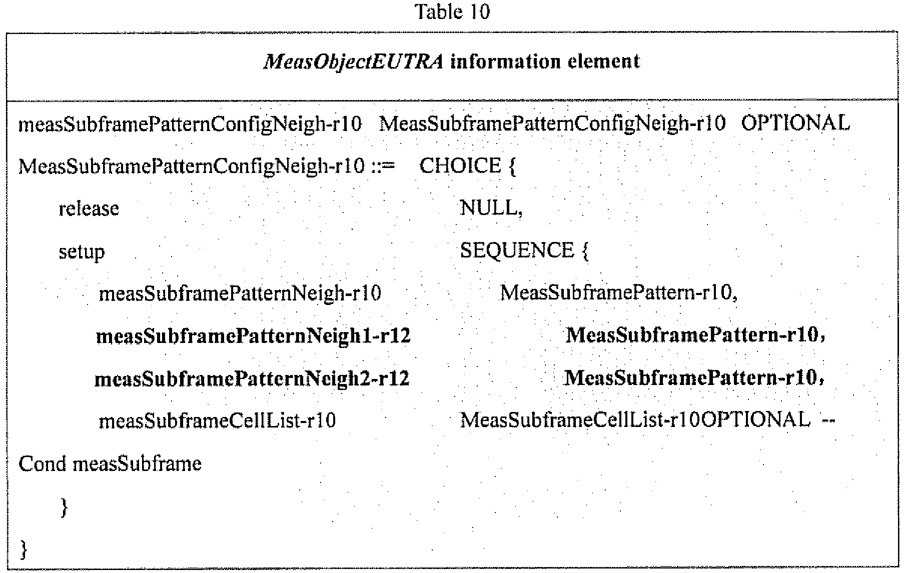

As shown in Table 10, measSubframePatternNeigh1-r12 is configuration of a first measure object, and measSubframePatternNeigh2-r12 is configuration of a second measure object.

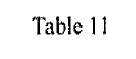

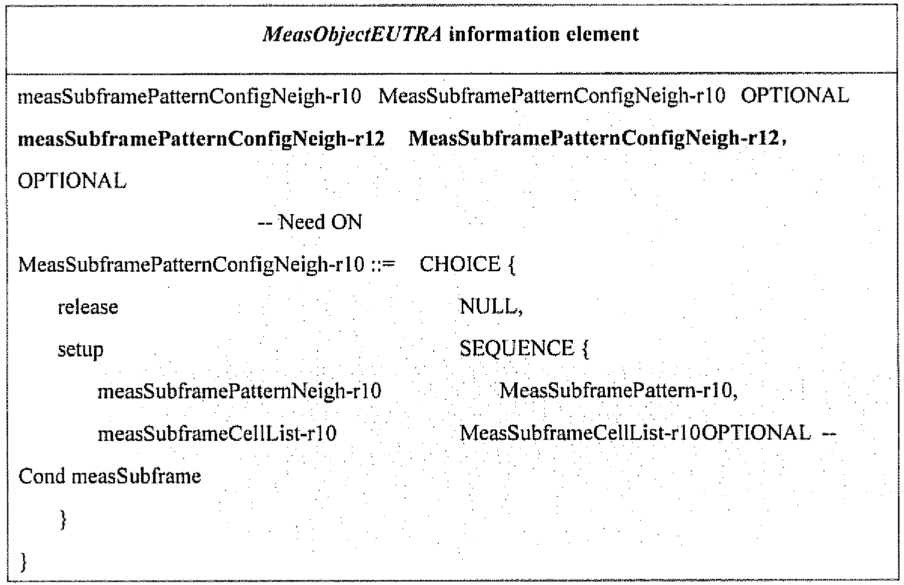

As shown in Table 11, measSubframePatternConfigNeigh-r10 is configuration of a first measure object, and measSubframePatternConfigNeigh -r12 is configuration of a second measure object. A similar modification may be performed in corresponding *measSubframePatternPCell.*

Cases of independently configuring respectively are shown above; however, the present disclosure is not limited thereto. For another example, a set of patterns may be configured explicitly only and taken as one of the measurement results, and patterns of another measurement result may be implicitly obtained from this set of patterns, which is, for example, a complementary set of this set of patterns. Furthermore, the OFDM symbols and/or subcarriers for obtaining the first measurement result and the second measurement result may be different, may be predefined, or may be configured via a high layer.

Furthermore, there may be no intersection between the resources configured for the first measurement result and the resources configured for the second measurement result. For example, the subframe configuration for obtaining the first measurement result and the second measurement result may be nonoverlapped.

In this embodiment, subframes may be configured for a user equipment measuring small cells in an on-state and/or an off-state, so that when the user equipment performs measurement related to interference, the user equipment may differentiate subframes of other small cells for transmitting signals and subframes having no small cell transmitting a signal.

FIG. 6 is an exemplary diagram of signal measurement of an embodiment of the present disclosure. As shown in FIG. 6, a small cell cluster may contain three cells 1, 2 and 3 in an off-state and a cell 4 in an on-state.

As shown in FIG. 6, it is assumed that the small cells 1, 2 and 3 in an off-state transmit signals for discovery and/or measurement in identical subframes, with a transmission interval of N ms, the signals being transmitted in L ms of each N ms, L being 1 or an integer less than or equal to N. For example, N=200 ms, and L=5 ms. All the small cells in an off-state transmit signals for discovery and/or measurement in former 5 ms of each 200 ms, and the small cell 4 in an on-state may transmit signals for discovery and/or measurement in identical subframes, or in other subframes.

Then, the user equipment may be configured to measure interference of all the cells in an on-state only in subframes having no other small cell in an off-state transmitting a signal, with former 5 ms of each 200 ms being avoided. For example, measurement is performed in subframes in the circled part in FIG. 6, with a measurement result being the first measurement result, and the second measurement result being obtained in other subframes non-overlapped with each other.

In this embodiment, multiple sets of resources may be configured for obtaining the first measurement result, and/or multiple sets of resources may be configured for obtaining the second measurement result.

For example, the user equipment may be configured with multiple sets of resources for obtaining the second measurement results, but is configured with only one set of resources for obtaining the first measurement result. And the user equipment may add up different second measurement results and the first measurement result, so as to obtain different RSSIs. Furthermore, the user equipment may correspond respective second measurement results to the RSSIs, so as to obtain different RSRQs.

Or, the user equipment may be configured with one set of resources for obtaining the second measurement result, but is configured with multiple sets of resources for obtaining the first measurement results. And the user equipment may add up the second measurement result and different first measurement results, so as to obtain different RSSIs. Furthermore, the user equipment may correspond respective first measurement results to the RSSIs, so as to obtain different RSRQs.

Or, the user equipment may be configured with multiple sets of resources for obtaining the second measurement results, and is configured with multiple sets of resources for obtaining the first measurement results. And the user equipment may add up different second measurement results and different first measurement results, so as to obtain different RSSIs.

Taking still FIG. 6 as an example, a measurement result 1 may be obtained in the circled part in FIG. 6. The user equipment may be configured to measure a signal intensity only in subframes having no other small cell in an off-state transmitting a signal in measuring RSRP of a small cell in an on-state, with measurement result being a measurement result 2.a. And the user equipment may be configured to perform measurement only in its subframes transmitting measurement signals in measuring RSRP of a small cell in an off-state, with measurement result being a measurement result 2.b.

Hence, the user equipment may calculate RSRQ which only takes influence of a cell in an on-state into account as demanded, such as the measurement result 2.a/ measurement result 1. Or, the user equipment may calculate SINR which only takes influence of a cell in an on-state into account as demanded, such as the measurement result 2.b/ measurement result 1. Or, the user equipment may calculate RSRQ which takes influence of a cell in an off-state into account as demanded, and add up the measurement result 1 and the measurement result 2.b, such as the measurement result 2.b / (the measurement result 1 + the measurement result 2.b).

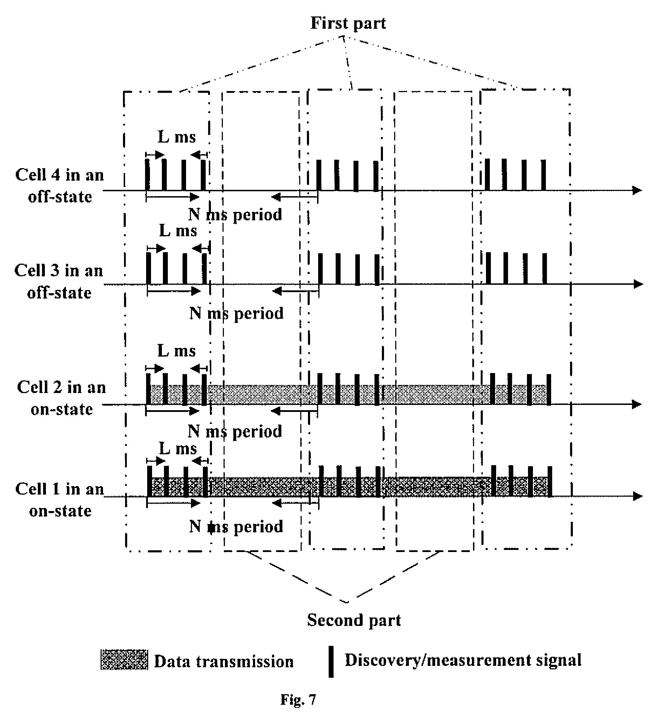

FIG. 7 is another exemplary diagram of signal measurement of the embodiment of the present disclosure. As shown in FIG. 7, in order to embody influence of a small cell in an off-state, the user equipment may be configured to perform measurement in different subframes.

For example, interference of all cells in an on-state may be measured only in subframes having no other small cell in an off-state transmitting a signal, that is, former 5 ms of each 200 ms is avoided, such as a first part of subframes in FIG. 7, a measurement result of which being a measurement result 1.a.

And the user equipment may be configured to measure interference of all cells only in subframes having other small cells in an off-state transmitting signals, that is, the former 5 ms of each 200 ms, such as a second part of subframes in FIG. 7, a measurement result of which being a measurement result 1.b.

Furthermore, the user equipment may calculate respectively RSRQ or SINR taking influence of a cell in an off-state into account and taking only influence of a cell in an on-state into account. For example, the measurement result 2.a/measurement result 1.a and the measurement result 2.a/measurement result 1.b may be calculated.

In this embodiment, the user equipment may transmit the measurement information to the base station according to an actual situation. The measurement information may include one piece of the following information or a combination thereof: the first measurement result, the second measurement result, and the information indicative of channel quality obtained by the user equipment.

It can be seen from the above embodiment that the receiving signals in the time-frequency resources in part or all the subframes are measured, so as to obtain the first measurement result and the second measurement result, and the information indicative of channel quality is obtained according to the first measurement result and the second measurement result, which may take influence of a cell in an off-state into account, thereby accurately obtaining measurement results.

### Embodiment 3

An embodiment of the present disclosure provides a user equipment, corresponding to the signal measurement method described in Embodiment 1 or Embodiment 2, with contents identical to those in Embodiment 1 or Embodiment 2 being not going to be described herein any further.

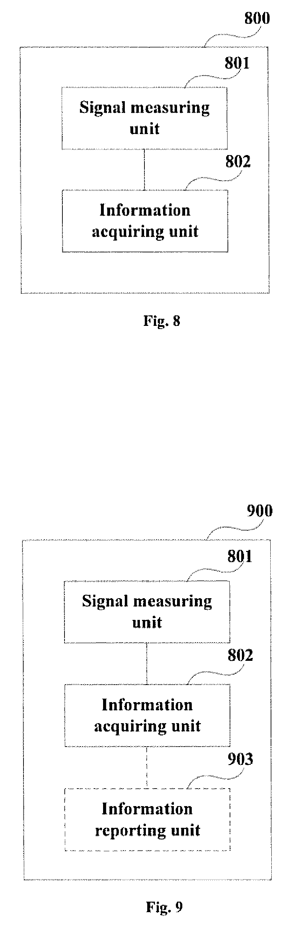

FIG. 8 is a schematic diagram of a structure of the user equipment of the embodiment of the present disclosure. As shown in FIG. 8, the user equipment 800 includes a signal measuring unit 801 and an information acquiring unit 802. For the sake of simplicity, other parts of the user equipment 800 are not shown, and the prior art may be referred to.

The signal measuring unit 801 is configured to measure a received signal in a time-frequency resource in part of subframes or all subframes, so as to obtain a first measurement result and a second measurement result, and the information acquiring unit 802 is configured to obtain information indicative of channel quality according to the first measurement result and the second measurement result.

In an implementation, the first measurement result may be a sum of a noise and interference power, and the second measurement result may be a result of measurement of a reference signal in the time-frequency resource.

In an implementation, resources of the first measurement result and resources of the second measurement result are configured respectively, which may be different from each other.

FIG. 9 is another schematic diagram of a structure of the user equipment of the embodiment of the present disclosure. As shown in FIG. 9, the user equipment 900 includes a signal measuring unit 801 and an information acquiring unit 802, as described above.

As shown in FIG. 9, the user equipment 900 may further include an information reporting unit 903 configured to report measurement information to a base station. The measurement information may include one piece of the following information or a combination thereof: the first measurement result, the second measurement result, and the information indicative of channel quality.

It can be seen from the above embodiment that the receiving signals in the time-frequency resources in part or all the subframes are measured, so as to obtain the first measurement result and the second measurement result, and the information indicative of channel quality is obtained according to the first measurement result and the second measurement result, which may take influence of a cell in an off-state into account, thereby accurately obtaining measurement results.

### Embodiment 4

An embodiment of the present disclosure provides a signal measurement method, which shall be described from a base station side, with contents identical to those in Embodiment 1 being not going to be described herein any further.

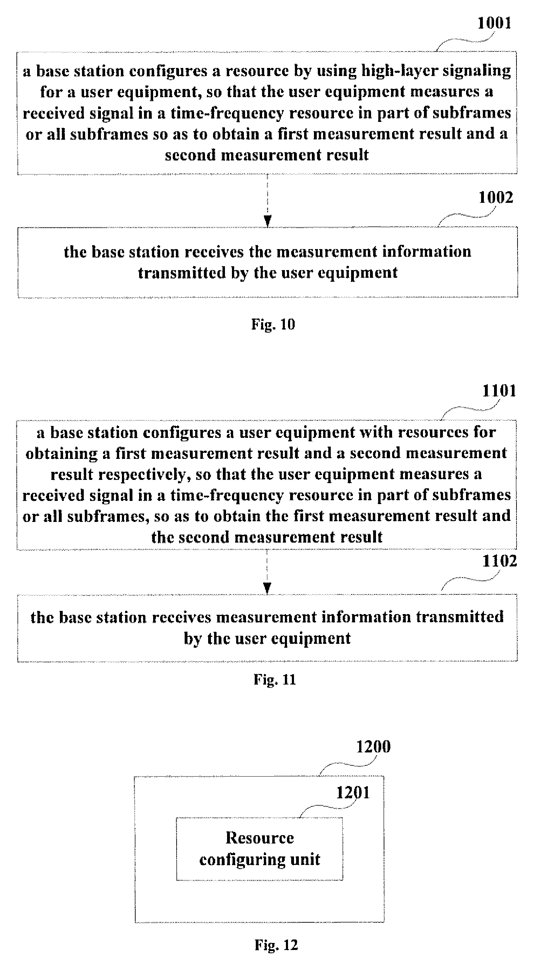

FIG. 10 is a flowchart of the signal measurement method of the embodiment of the present disclosure. As shown in FIG. 10, the signal measurement method includes:
step 1001: a base station configuring a resource by using high-layer signalling for a user equipment, so that the user equipment measures a received signal in a time-frequency resource in part of subframes or all subframes so as to obtain a first measurement result and a second measurement result;
wherein the first measurement result is a sum of a received equivalent noise and interference power, and the second measurement result is a result of measurement of a reference signal in the time-frequency resource.

As shown in FIG. 10, the method may further include:
step 1002: the base station receives measurement information transmitted by the user equipment.

The measurement information may be the first measurement result, the second measurement result, or information indicative of channel quality, the information indicative of channel quality being obtained by the user equipment according to the first measurement result and the second measurement result.

In this embodiment, the base station may directly receive the information indicative of channel quality transmitted by the user equipment, such as an SINR, an RSSI, or an RSRQ, etc. Furthermore, the base station may calculate the information indicative of channel quality based on received measurement information as demanded.

In an implementation, the base station may receive the first measurement result (such as I+N) and the second measurement result (such as the RSRP) to calculate the SINR. In another implementation, the base station may receive the second measurement result (such as RSRP) and the information indicative of channel quality (such as the SINR) to calculate the RSSI and/or the RSRQ; however, the present disclosure is not limited thereto, and a particular implementation may be determined according to an actual situation.

It can be seen from the above embodiment that the receiving signals in the time-frequency resources in part or all the subframes are measured, so as to obtain the first measurement result and the second measurement result, and the information indicative of channel quality is obtained according to the first measurement result and the second measurement result, which may take influence of a cell in an off-state into account, thereby accurately obtaining measurement results.

### Embodiment 5

An embodiment of the present disclosure provides a signal measurement method, which shall be described from a base station side, with contents identical to those in Embodiment 2 being not going to be described herein any further.

FIG. 11 is a flowchart of the signal measurement method of the embodiment of the present disclosure. As shown in FIG. 11, the signal measurement method includes:
step 1101: a base station configures a user equipment with resources for a first measurement result and a second measurement result respectively, so that the user equipment measures a received signal in a time-frequency resource in part of subframes or all subframes, so as to obtain the first measurement result and the second measurement result.

As shown in FIG. 11, the method may further include:
step 1102: the base station receives measurement information transmitted by the user equipment; wherein, the measurement information may be the first measurement result, the second measurement result, or information indicative of channel quality, the information indicative of channel quality being obtained by the user equipment according to the first measurement result and the second measurement result.

In this embodiment, the base station may directly receive the information indicative of channel quality transmitted by the user equipment, such as an SINR, an RSSI, or an RSRQ, etc. Furthermore, the base station may calculate the information indicative of channel quality based on received measurement information as demanded.

In an implementation, the base station may receive the first measurement result (such as I+N) and the second measurement result (such as the RSRQ) to calculate the SINR. In another implementation, the base station may receive the second measurement result (such as RSRP) and the information indicative of channel quality (such as the SINR) to calculate the RSSI and/or the RSRQ; however, the present disclosure is not limited thereto, and a particular implementation may be determined according to an actual situation.

In this embodiment, the base station may configure the user equipment with multiple sets of resources for obtaining the first measurement result, and/or the base station may configure the user equipment with multiple sets of resources for obtaining the second measurement result.

It can be seen from the above embodiment that the receiving signals in the time-frequency resources in part or all the subframes are measured, so as to obtain the first measurement result and the second measurement result, and the information indicative of channel quality is obtained according to the first measurement result and the second measurement result, which may take influence of a cell in an off-state into account, thereby accurately obtaining measurement results.

### Embodiment 6

An embodiment of the present disclosure provides a base station, corresponding to the signal measurement method described in Embodiment 4 or Embodiment 5, with contents identical to those in Embodiment 4 or Embodiment 5 being not going to be described herein any further.

FIG. 12 is a schematic diagram of a structure of the base station of the embodiment of the present disclosure. As shown in FIG. 12, the base station 1200 includes a resource configuring unit 1201. For the sake of simplicity, other parts of the base station 1200 are not shown, and the prior art may be referred to.

In an implementation, the resource configuring unit 1201 is configured to configure a resource by using high-layer signalling for a user equipment, so that the user equipment measures a received signal in a time-frequency resource in part of subframes or all subframes, so as to obtain a first measurement result and a second measurement result; wherein the first measurement result is a sum of a received equivalent noise and interference power, and the second measurement result is a result of measurement of a reference signal in the time-frequency resource.

In an implementation, the resource configuring unit 1201 is configured to configure the user equipment respectively with resources for the first measurement result and the second measurement result, so that the user equipment measures the receiving signals in time-frequency resources in part or all subframes, so as to obtain the first measurement result and the second measurement result.

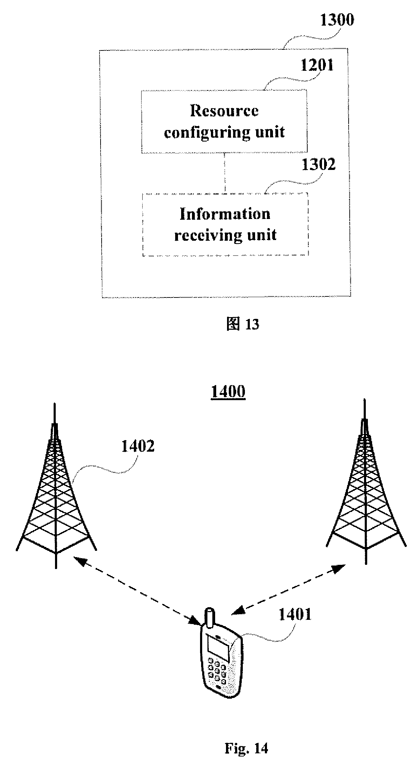

FIG. 13 is another schematic diagram of the structure of the base station of the embodiment of the present disclosure, As shown in FIG. 13, the base station 1300 includes a resource configuring unit 1201. For the sake of simplicity, other parts of the base station 1300 are not shown, and the prior art may be referred to.

As shown in FIG. 13, the base station 1300 may further include an information receiving unit 1302. The information receiving unit 1202 is configured to receive the measurement information transmitted by the user equipment. The measurement information includes one piece of the following information or a combination thereof: the first measurement result, the second measurement result, and information indicative of channel quality, the information indicative of channel quality being obtained by the user equipment according to the first measurement result and the second measurement result.

It can be seen from the above embodiment that the receiving signals in the time-frequency resources in part or all the subframes are measured, so as to obtain the first measurement result and the second measurement result, and the information indicative of channel quality is obtained according to the first measurement result and the second measurement result, which may take influence of a cell in an off-state into account, thereby accurately obtaining measurement results.

### Embodiment 7

An embodiment of the present disclosure provides a communication system, including the user equipment as described in Embodiment 3 and the base station as described in Embodiment 6.

FIG. 14 is a schematic diagram of a structure of the communication system of the embodiment of the present disclosure. As shown in FIG. 14, the communication system 1400 includes a user equipment 1401 and a base station 1402. Wherein, the user equipment 1401 may the user equipment 800 or 900 in Embodiment 3, and the base station 1402 may be the base station 1200 or 1300 in Embodiment 6. And the base station 1402 may be a base station of a cell in an off-state or in an on-state.

An embodiment of the present disclosure provides a computer-readable program, wherein when the program is executed in a user equipment, the program enables the computer to carry out the signal measurement method as described in Embodiment 1 our 2 in the user equipment.

An embodiment of the present disclosure provides a storage medium in which a computer-readable program is stored, wherein the computer-readable program enables the computer to carry out the signal measurement method as described in Embodiment 1 or 2 in a user equipment.

An embodiment of the present disclosure provides a computer-readable program, wherein when the program is executed in a base station, the program enables the computer to carry out the signal measurement method as described in Embodiment 4 or 5 in the base station.

An embodiment of the present disclosure provides a storage medium in which a computer-readable program is stored, wherein the computer-readable program enables the computer to carry out the signal measurement method as described in Embodiment 4 or 5 in a base station.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

One or more functional blocks and/or one or more combinations of the functional blocks in Figures may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principles of the present disclosure, and such variants and modifications fall within the scope of the present disclosure,

## Claims

1. A signal measurement method, comprising:
measuring, by a user equipment, a received signal in a time-frequency resource in part of subframes or all subframes, so as to obtain a first measurement result and a second measurement result; and
obtaining information indicative of channel quality according to the first measurement result and the second measurement result;
wherein the first measurement result is a sum of a received equivalent noise and interference power, and the second measurement result is a result of measurement of a reference signal in the time-frequency resource.

2. The signal measurement method according to claim 1, wherein the sum of a received equivalent noise and interference power is a linear average value of receiving power observed in a measurement bandwidth in all OFDM symbols, or a linear average value of receiving power observed in a measurement bandwidth in OFDM symbols containing no a signal for measurement.

3. The signal measurement method according to claim 1, wherein the part of subframes is configured by using high-layer signalling, and configuration information of the part of subframes comprises period information and indication information of part of subframes in each period.

4. The signal measurement method according to claim 1, wherein the information indicative of channel quality comprises a signal to interference plus noise ratio, or comprises a received signal strength indicator and/or reference signal receiving quality.

5. The signal measurement method according to claim 1, wherein the time-frequency resource for obtaining the first measurement result comprises all or part of subcarriers of multiple physical resource blocks of all OFDM symbols in the part of subframes or all subframes, or
all or part of subcarriers of multiple physical resource blocks of part of OFDM symbols in the part of subframes or all subframes.

6. The signal measurement method according to claim 1, wherein the method further comprises:
reporting, by the user equipment, measurement information to a base station;
wherein the measurement information comprises one piece of the following information or a combination thereof: the first measurement result, the second measurement result, and the information indicative of channel quality.

7. A signal measurement method, comprising:
measuring, by a user equipment, a received signal in a time-frequency resource in part of subframes or all subframes, so as to obtain a first measurement result and a second measurement result; wherein a resource of the first measurement result and a resource of the second measurement result are configured respectively; and
obtaining information indicative of channel quality according to the first measurement result and the second measurement result.

8. The signal measurement method according to claim 7, wherein signalling for the first measurement result and the second measurement result are respectively used to explicitly configure subframe patterns of measurement.

9. The signal measurement method according to claim 7, wherein signalling is used to configure a set of subframe patterns, which is explicitly used for one of the measurement results, and impliedly indicates subframe patterns of the other measurement result.

10. The signal measurement method according to claim 7, wherein there is no intersection between the resource configured for the first measurement result and the resource configured for the second measurement result.

11. The signal measurement method according to claim 7, wherein the resource configured for the first measurement result and the resource configured for the second measurement result are not capable of overlapping completely.

12. The signal measurement method according to claim 7, wherein the obtaining information indicative of channel quality according to the first measurement result and the second measurement result comprises: adding up the first measurement result and the second measurement result, so as to obtain received signal strength indication information.

13. The signal measurement method according to claim 7, wherein the method further comprises: configuring multiple sets of resources for obtaining the first measurement result, and/or configuring multiple sets of resources for obtaining the second measurement result.

14. The signal measurement method according to claim 7, wherein the first measurement result is obtained by measuring interference of cells in an on-state only in subframes containing no a signal transmitted by cells in an off-state.

15. The signal measurement method according to claim 14, wherein the method further comprises:
obtaining the second measurement result of the cells in an on-state by measuring signal strength in subframes containing no a signal transmitted by cells in an off-state; or
obtaining the second measurement result of the cells in an off-state by measuring signal strength in subframes of signals transmitted by cells in an off-state.

16. The signal measurement method according to claim 7, wherein the method further comprises:
reporting, by the user equipment, measurement information to a base station;
wherein the measurement information comprises one piece of the following information or a combination thereof: the first measurement result, the second measurement result, and the information indicative of channel quality.

17. A signal measurement method, comprising:
configuring, by a base station, a resource by using high-layer signalling for a user equipment, so that the user equipment measures a received signal in a time-frequency resource in part of subframes or all subframes so as to obtain a first measurement result and a second measurement result;
wherein the first measurement result is a sum of a received equivalent noise and interference power, and the second measurement result is a result of measurement of a reference signal in the time-frequency resource.

18. The signal measurement method according to claim 17, wherein the method further comprises:
receiving, by the base station, the measurement information transmitted by the user equipment.

19. The signal measurement method according to claim 18, wherein the measurement information comprises one piece of the following information or a combination thereof: the first measurement result, the second measurement result, and information indicative of channel quality, the information indicative of channel quality being obtained by the user equipment according to the first measurement result and the second measurement result.

20. The signal measurement method according to claim 18, wherein the method further comprises:
calculating, by the base station, the information indicative of channel quality according to the measurement information.

21. A signal measurement method, comprising:
configuring, by a base station, a user equipment with resources for obtaining a first measurement result and a second measurement result respectively, so that the user equipment measures a received signal in a time-frequency resource in part of subframes or all subframes, so as to obtain the first measurement result and the second measurement result.

22. The signal measurement method according to claim 21, wherein the method further comprises:
receiving, by the base station, measurement information transmitted by the user equipment.

23. The signal measurement method according to claim 22, wherein the measurement information comprises one piece of the following information or a combination thereof: the first measurement result, the second measurement result, and information indicative of channel quality, the information indicative of channel quality being obtained by the user equipment according to the first measurement result and the second measurement result.

24. The signal measurement method according to claim 22, wherein the method further comprises:
calculating, by the base station, the information indicative of channel quality according to the measurement information.

25. The signal measurement method according to claim 21, wherein the method further comprises:
configuring, by the base station, the user equipment with multiple sets of resources for obtaining the first measurement result, and/or configuring multiple sets of resources for obtaining the second measurement result.

26. A user equipment, comprising:
a signal measuring unit configured to measure a received signal in a time-frequency resource in part of subframes or all subframes, so as to obtain a first measurement result and a second measurement result; wherein the first measurement result is a sum of a received equivalent noise and interference power, and the second measurement result is a result of measurement of a reference signal in the time-frequency resource; and
an information acquiring unit configured to obtain information indicative of channel quality according to the first measurement result and the second measurement result.

27. The user equipment according to claim 26, wherein the user equipment further comprises:
an information reporting unit configured to report measurement information to a base station;
wherein the measurement information comprises one piece of the following information or a combination thereof: the first measurement result, the second measurement result, and the information indicative of channel quality.

28. A user equipment, comprising:
a signal measuring unit configured to measure a received signal in a time-frequency resource in part of subframes or all subframes, so as to obtain a first measurement result and a second measurement result; wherein a resource of the first measurement result and a resource of the second measurement result are configured respectively; and
an information acquiring unit configured to obtain information indicative of channel quality according to the first measurement result and the second measurement result.

29. The user equipment according to claim 28, wherein the user equipment further comprises:
an information reporting unit configured to report measurement information to a base station;
wherein the measurement information comprises one piece of the following information or a combination thereof: the first measurement result, the second measurement result, and the information indicative of channel quality.

30. A base station, comprising:
a resource configuring unit configured to configure a resource by using high-layer signalling for a user equipment, so that the user equipment measures a received signal in a time-frequency resource in part of subframes or all subframes, so as to obtain a first measurement result and a second measurement result;
wherein the first measurement result is a sum of a received equivalent noise and interference power, and the second measurement result is a result of measurement of a reference signal in the time-frequency resource.

31. The base station according to claim 30, wherein the base station further comprises:
an information receiving unit configured to receive the measurement information transmitted by the user equipment;
wherein the measurement information comprises one piece of the following information or a combination thereof: the first measurement result, the second measurement result, and information indicative of channel quality, the information indicative of channel quality being obtained by the user equipment according to the first measurement result and the second measurement result.

32. A base station, comprising:
a resource configuring unit configured to configure a user equipment with resources for obtaining a first measurement result and a second measurement result respectively, so that the user equipment measures a received signal in a time-frequency resource in part of subframes or all subframes, so as to obtain the first measurement result and the second measurement result.

33. The base station according to claim 32, wherein the base station further comprises:
an information receiving unit configured to receive measurement information transmitted by the user equipment;
wherein the measurement information comprises one piece of the following information or a combination thereof: the first measurement result, the second measurement result, and information indicative of channel quality, the information indicative of channel quality being obtained by the user equipment according to the first measurement result and the second measurement result.

34. A communication system, comprising the user equipment as claimed in claim 26 or 27, and the base station as claimed in claim 30 or 31;
or comprising the user equipment as claimed in claim 28 or 29, and the base station as claimed in claim 32 or 33.

35. A computer-readable program, wherein when the program is executed in user equipment, the program enables the computer to carry out the signal measurement method as claimed in any one of claims 1-16 in the user equipment.

36. A storage medium in which a computer-readable program is stored, wherein the computer-readable program enables the computer to carry out the signal measurement method as claimed in any one of claims 1-16 in user equipment.

37. A computer-readable program, wherein when the program is executed in a base station, the program enables the computer to carry out the signal measurement method as claimed in any one of claims 17-25 in the base station.

38. A storage medium in which a computer-readable program is stored, wherein the computer-readable program enables the computer to carry out the signal measurement method as claimed in any one of claims 17-25 in a base station.
